# EUROPÄISCHE PATENTSCHRIFT

(11) **EP 1 013 375 B1**
(45) Veröffentlichungstag und Bekanntmachung des Hinweises auf die Patenterteilung: **29.10.2003**
(21) Anmeldenummer: 99124907.9
(22) Anmeldetag: 14.12.1999
(51) Int. Cl.: B23Q 16/08, B23Q 16/02, B23H 7/26

(54) **Kupplungsvorrichtung mit zwei Kupplungsorganen und einer Spanneinrichtung**
Coupling device having two coupling parts and a clamping device.
Dispositif d'accouplement avec deux parties d'accouplement, et un dispositif de serrage

(30) Priorität: 16.12.1998 DE 19857913
(43) Veröffentlichungstag der Anmeldung: 28.06.2000
(73) Patentinhaber: System 3R International AB, 162 50 Vällingby (SE)
(72) Erfinder: Nordquist, Hakon, 18775 Täby (SE); Nielsen, Robert, 13133 Nacka (SE)
(74) Vertreter: Zinngrebe, Horst, Dr.rer.nat.

(56) Entgegenhaltungen:
- EP-A- 0 255 042
- DE-U- 29 521 030
- US-A- 4 449 027
- US-A- 4 838 533

## Beschreibung

Die Erfindung betrifft eine Kupplungsvorrichtung bestehend aus einem ersten Kupplungsorgan und einem zweiten Kupplungsorgan sowie einer Spanneinrichtung zum axialen Zusammenspannen der beiden Kupplungsorgane, wobei von dem ersten Kupplungsorgan wenigstens drei Zapfen vorstehen und an dem zweiten Kupplungsorgan wenigstens drei Nuten in einer der Anordnung der Zapfen entsprechenden Anordnung ausgebildet sind, und wobei an den Zapfen oder den Nuten x-y-Referenzflächen sowie an den Nuten oder den Zapfen axialelastische Elemente vorhanden sind, die beim Zusammenspannen das zweite Kupplungsorgan relativ zum ersten Kupplungsorgan in einer zur Spannrichtung senkrechten x-y-Ebene ausrichten, und wobei an beiden Kupplungsorganen beim Zusammenspannen zusammenwirkende z-Referenzflächen und z-Gegenreferenzflächen ausgebildet sind (US 4 838 533 A).

Bei der in der Schrift EP-A-255 042 beschriebenen Spannvorrichtung sind zur genauen Positionierung der beiden Kupplungsorgane zueinander in z-Richtung, die üblicherweise mit der Spannrichtung übereinstimmt, an einem der Kupplungsorgane mehrere vorstehende Pfosten vorhanden, an deren freien Stirnflächen die z-Referenzflächen ausgebildet sind. Am anderen Kupplungsorgan befinden sich in den Pfosten entsprechender Anordnung mehrere z-Gegenreferenzflächen, welche in einer gemeinsamen Ebene liegen und beim Zusammenspannen mit den z-Referenzflächen zusammenwirken. Eine ähniche Anordnung zur z-Positionierung zweier Kupplungsorgane ist aus DE-U-295 21 030 bekannt.

Der Erfindung liegt die Aufgabe zugrunde, die konstruktive Gestaltung der z-Positionierung zweier Kupplungsorgane insbesondere bei hoher axialer Belastung zu vereinfachen.

Dazu sind bei der eingangs genannten Kupplungsvorrichtung erfindungsgemäß die Merkmale nach dem kennzeichnenden Teil des Patentanspruches 1 vorgesehen.

Damit erhöht sich die Standfestigkeit der z-Positionierung, weil sich die äußere Belastung auf größere Referenzflächen verteilt. Zweckmäßig sind die zusätzlichen z-Gegenreferenzflächen auf der Oberseite des eine Form tragenden Kupplungsorgans angeordnet.

In Fällen, bei denen es auf die z-Positionierung nicht extrem genau ankommt, kann in Fortführung der Erfindung vorgesehen sein, daß im zusammengespannten Zustand der beiden Kupplungsorgane zwischen jeder zusätzlichen z-Referenzfläche und der jeweils zugehörigen zusätzlichen z-Gegenreferenzfläche ein Abstand von einem oder wenigen µm besteht Bei geringeren axialen Belastungen wirken beispielsweise nur die z-Referenzflächen und z-Gegenreferenzflächen zur z-Positionierung zusammen, während die zusätzlichen z-Referenzen erst bei höheren Belastungen miteinander in Eingriff gelangen. Es ist jedoch auch eine Ausführungsform der Erfindung möglich, bei der bei im zusammengespannten Zustand der beiden Kupplungsorgane zwischen jeder z-Referenzfläche und der jeweils zugehörigen z-Gegenreferenzfläche ein Abstand von einem oder wenigen µm besteht. Diese Ausgestaltung hat den Vorteil, daß eine etwaige belastungsbedingte Deformation der Pfosten ohne Einfluß auf die Ausrichtung der Kupplungsorgane zueinander in der x-y-Ebene bleibt.

Die Erfindung kann überall dort eingesetzt werden, wo das eine Kupplungsorgan beispielsweise mit dem Bearbeitungskopf einer Werkzeugmaschine fest verbunden ist und das andere, bewegliche Kupplungsorgan das zu bearbeitende Werkstück trägt In allen diesen Fällen wirkt auf die zusammengespannten Kupplungsorgane wenn überhaupt dann nur eine geringe äußere axiale Kraft ein. Es gibt jedoch andere Einsatzmöglichkeiten von erfindungsgemäßen Kupplungsvorrichtungen, bei denen die zusammengespannten Kupplungsorgane einer erheblichen axialen Belastung ausgesetzt werden. Dies liegt beispielsweise bei der Herstellung von Preßlingen aus Metallpulver vor, bei der eine erste Kupplungsvorrichtung zwischen einem beweglichen Preßstempel und einer diesem zugeordneten ersten Form und eine zweite Kupplungsvorrichtung zwischen dem Gegenlager und der zweiten, feststehenden Form zwischengeschaltet sind. Der erhebliche Preßdruck, der beim Verpressen des zwischen den beiden Formen befindlichen Metallpulvers zu dem gewünschten Preßling aufgebracht werden muß, wirkt auf die zusammengespannten Kupplungsorgane in Richtung der von der Spanneinrichtung aufgebrachten Spannkraft. Bei einem Preßdruck, der über einen vorgegebenen Grenzwert hinausgeht, kann die Genauigkeit der z-Positionierung der beiden Kupplungsorgane beeinträchtigt werden.

Vorteilhafterweise ist die z-Gegenreferenzfläche auf einem vertikalen Vorsprung des Nutengrundes ausgebildet. Sind die axialelastischen Elemente beispielsweise vertikale Schenkel eines separaten Nuteneinsatzes, dessen Boden auf einer Erhebung des Nutengrundes befestigt ist, erstreckt sich der mit der z-Gegenreferenzfläche versehene Vorsprung zweckmäßigerweise vertikal aus der Erhebung durch eine Öffnung des Bodens.

Im übrigen sind bevorzugte Ausgestaltungen der Erfindung in den Unteransprüchen angegeben. In der beigefügten Zeichnung und der zugehörigen, nachfolgenden Beschreibung wird die Erfindung an einem Ausführungsbeispiel erläutert Es zeigen:
Figur 1 eine schematische Darstellung zweier Kupplungsorgane kurz vor ihrer Justierung in der x-y-Ebene vor dem Zusammenspannen;

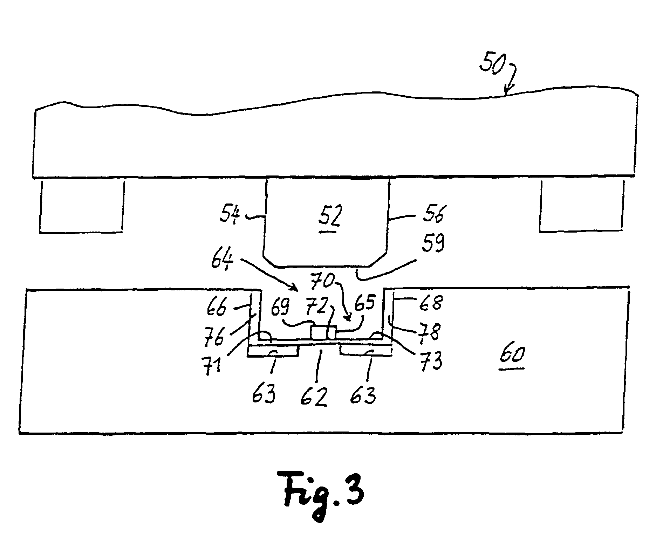

Figur 2 eine schematische Darstellung der beiden Kupplungsorgane nach Figur 1 nach dem Zusammenspannen und unter dem Einfluß einer sehr hohen äußeren axialen Belastung, und
Figur 3 eine schematische Darstellung einer weiteren Ausführungsform der Kupplungsvorrichtung.

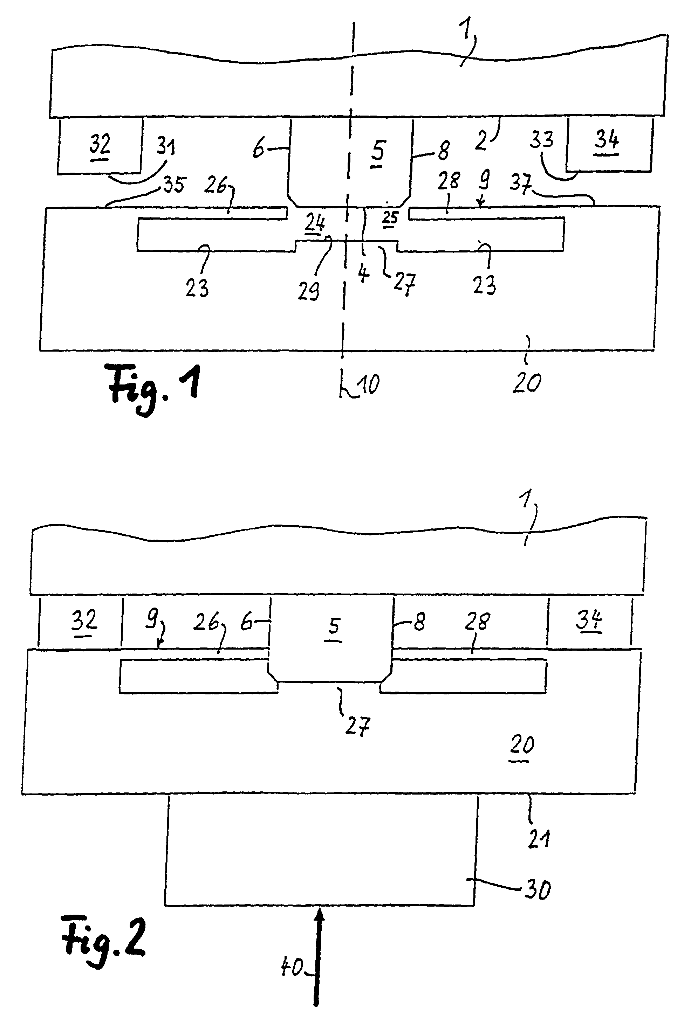

Das erste Kupplungsorgan 1 kann an einem Bearbeitungskopf einer nicht dargestellten Werzeugmaschine, beispielsweise einer Senkerodiermaschine befestigt sein und weist eine im wesentlichen plane Unterseite 2 auf, welche sich quer zu einer mit der z-Richtung zusammenfallenden Achse 10 erstreckt. Aus der Unterseite 2 stehen vier kreuzweise angeordnete und daher in Umfangsrichtung gleich beabstandete Prismenzapfen vor, von denen in Figur 1 nur der Prismenzapfen 5 zu erkennen ist. Da alle Prismenzapfen gleichartig gestaltet sind, wird nur der Prismenzapfen 5 im einzelnen beschrieben. Er besitzt zwei gegenüberliegende , ebene Prismenflächen 6, 8, von denen jede so gegen die Achse 10 geneigt ist, daß sich der Prismenzapfen 5 von der Unterseite 2 weg verjüngt. Die Neigung der Prismenflächen 6, 8 zur Achse 10 ist relativ gering und daher aus Figur 1 nur schwer zu erkennen.

Die freie Stirnfläche 4 des Prismenzapfens 5 ist als eine geschliffene z-Referenzfläche ausgebildet, die sich genau senkrecht zur Achse 10 erstreckt. Es versteht sich, daß die freien Stirnflächen der übrigen nicht dargestellten Prismenzapfen ebenfalls als z-Referenzflächen derart ausgebildet sind, daß alle z-Referenzflächen genau in einer gemeinsamen, sich zur Achse 10 senkrecht erstreckenden Ebene liegen. Somit ist das Kupplungsorgan 1 mit vier kreuzweise angeordneten z-Referenzflächen ausgerüstet.

Das zweite, bewegliche Kupplungsorgan 20 trägt an seiner Unterseite 21 ein nicht dargestelltes Werkstück, welches in der Werkzeugmaschine bearbeitet werden soll. In seine Oberseite 9, die zur Vorbereitung des Zusammenspannens der beiden Kupplungsorgane 1, 20 der Unterseite 2 des ersten Kupplungsorgans 1 zugewandt ist, sind auf die Prismenzapfen 5 ausgerichtete vier Nuten eingebracht, von denen in den Figuren nur die Nut 24 ausgeführt ist und nachfolgend stellvertretend für die übrigen Nuten beschrieben wird. Die Nut 24 wird von zwei gegenüberliegenden, gleich langen und gleich breiten Lippen 26, 28 teilweise überdeckt, die die in den Ansprüchen genannten elastischen Elemente bilden und hier aus dem Korpus des zweiten Kupplungsorgans 20 herausgeschnitten (EP-A-255 042) oder als einzelne Federstahlsegmente auf einen Rohling für das Kupplungsorgan 20 aufgeschweißt sein können. Die Lippen 26, 28 sind jedenfalls unabhängig voneinander axialelastisch und lassen zwischen einander eine mittige Nutöffnung 25 frei, deren Breite größer ist als die Breite des Prismenzapfens 5 am von der Unterseite 2 entfernt liegenden Ende der Prismenflächen 6, 8 und kleiner ist als die Breite des Prismenzapfens 5 an seinem Übergang zur Unterseite 2. Wie dargestellt ist der Querschnitt jeder der Lippen 26, 28 ein rechteckiger. Die äußeren oberen freien Kanten der Lippen 26, 28 können in Anpassung an die Neigung der Prismenflächen 6, 8 leicht angefast sein.

Aus dem Nutengrund 23 erhebt sich mittig und damit im Bereich der Nutenöffnung 25 ein Vorsprung 27, an dessen Oberseite eine sich genau senkrecht zur Achse 10 erstreckende z-Gegenreferenzfläche 29 ausgebildet ist. Die Höhe des Vorsprungs 27 ist deutlich kleiner als der Abstand der Unterseite jeder der Lippen 26, 28 zum Nutengrund 23.

Zum Spannen und Entspannen der beiden Kupplungsorgane kann eine Spanneinrichtung dienen, wie sie beispielsweise in dem Dokument EP-A-255 042 beschrieben ist, sodaß diese hier nicht erläutert wird. Vor dem Spannen werden die beiden Kupplungsorgane 1, 20 gemäß Figur 1 einander angenähert, sodaß der Prismenzapfen 5 mit seinem freien Ende in die Nutöffnung 25 eindringt. Im Zuge des Eindringens gelangen die Kanten der Lippen 26, 28 in Anlage an die Prismenflächen 6, 8 und justieren dabei das Kupplungsorgan 20 in der x-y-Ebene relativ zum Kupplungsorgan 1. Bei weiterem Eindringen des Prismenzapfens 5 in die Nutöffnung 25 verbiegen sich die Lippen 26, 28 axial einwärts, was in Figur 1 nicht dargestellt ist. Die Spanneinrichtung zieht die beiden Kupplungsorgane 1, 20 soweit aufeinander zu, bis die z-Referenzfläche 4 auf der z-Gegenreferenzfläche 29 aufliegt. Damit ist das Kupplungsorgan 20 auch in z-Richtung relativ zum Kupplungsorgan 1 eindeutig positioniert. Zum Entspannen trennt die Spanneinrichtung die beiden Kupplungsorgane 1, 20 voneinander, sodaß der Prismenzapfen 5 aus der Nutöffnung 25 freikommt und die Lippen 26, 28 aufgrund ihrer Axialelastizität wieder ihre Ausgangslage einnehmen.

In der in Figur 3 dargestellten Ausführungsform der Erfindung bestehen die axialelastischen Elemente aus zwei gegenüberliegenden aufrecht stehenden Schenkeln 76, 78 eines im Querschnitt U-förmigen Einsatzes 70, der in eine Nut 64 des Kupplungsorgans 60 eingesetzt und auf einer mittigen Erhebung 62 aus dem Nutengrund 63 fest verankert ist und dessen Boden 72 beispielsweise aus Federstahl bestehen kann. Die beiden Schenkel 76, 78 liegen an der jeweils benachbarten vertikalen Nutenflanke 66, 68 an und sind vermöge der an die Schenkel 76, 78 angrenzenden und sich mit Abstand über den Nutengrund 63 erstreckenden Bodenabschnitte 71, 73 axialelastisch beweglich. Der Boden 72 weist eine mittige runde oder längliche Öffnung auf, durch die sich ein Vorsprung 65 vertikal nach oben erstreckt. Auf der Oberseite des Vorsprungs 65 ist eine z-Gegenreferenzfläche 69 ausgebildet, die beim Zusammenspannen gegen eine z-Referenzfläche 59 an der freien Stirnseite des Prismenzapfens 52 anliegt. Der aus der freien Unterseite 51 des ersten Kupplungsorgans 50 vorstehende Prismenzapfen 52 ist an seinen beiden gegenüberliegenden Seiten mit je einer Prismenfläche 54, 56 versehen.

Beim Zusammenspannen dringt der Prismenzapfen 52 in die Öffnung des Einsatzes 70 und damit in die Nut 64 ein, bis die freien Kanten der Schenkel 76, 78 die Prismenflächen 54, 56 kontaktieren und daurch die Ausrichtung der Kupplungsorgane 50 und 60 in der x-y-Ebene besorgen. Bei weiterem Eindringen des Prismenzapfens 52 in den Einsatz 70 verkeilen sich die Schenkel 76, 78 an den Prismenflächen 54, 56, sodaß die Schenkel 76, 78 vom Prismenzapfen 54 unter Verbiegen der Bodenabschnitte 71, 73 einwärts mitgenommen werden, bis dessen z-Referenzfläche 59 auf der z-Gegenreferenzfläche 69 aufsitzt.

Wird auf das mit dem Kupplungsorgan 1 zusammengespannte Kupplungsorgan 20 eine erhebliche äußere in Spannrichtung wirkende Kraft etwa gemäß Pfeil 40 ausgeübt, etwa während des Preßvorgangs, wenn an der Unterseite 21 des zweiten Kupplungsorgans 20 eine Form 30 aus einer Presse zur Herstellung von Preßlingen befestigt ist, wird diese Belastung über die aufeinanderliegenden Flächen 4 und 29 an den Prismenzapfen 5 weitergeleitet, der dann auf Stauchen beansprucht wird. Da ein Stauchen des Prismenzapfens 5 eine unregelmäßige Verdickung desselben hervorrufen kann, ist damit die Genauigkeit der Ausrichtung des Kupplungsorgans 20 in der x-y-Ebene gefährdet. Zur Minderung dieser Gefahr ist die erfindungsgemäße Kupplungsvorrichtung mit einem weiteren Satz an z-Referenzen ausgerüstet. Dazu stehen von der Unterseite 2 des Kupplungsorgans 1 mehrere in Umfangsrichtung beabstandete Pfosten 32, 34 vor, die an ihren freien Stirnflächen mit zusätzlichen z-Referenzflächen 31, 33 versehen sind. In einer den zusätzlichen z-Referenzflächen 31, 33 entsprechenden Anordnung sind auf der Oberseite des Kupplungsorgans 20 zusätzliche z-Gegenreferenzflächen 35, 37 ausgebildet. Die z-Referenzflächen 31, 33 liegen in einer gemeinsamen, zur Achse 10 senkrechten Ebene und die z-Gegenreferenzflächen 35, 37 liegen ebenfalls in einer gemeinsamen Ebene. Ist das Kupplungsorgan 20 soweit an das Kupplungsorgan 1 angenähert, daß die z-Referenzfläche 4 mit der Oberseite 9 des Kupplungsorgans 20 fluchtet, ist der Abstand der z-Referenzfläche 4 von der z-Gegenreferenzfläche 29 genauso groß wie der Abstand einer der zusätzlichen z-Referenzflächen 31, 33 zu der zugehörigen zusätzlichen z-Gegenreferenzfläche 35, 37.

Daher kommen in dem Augenblick, in welchem die z-Referenzfläche 4 auf der z-Gegenreferenzfläche 29 aufliegt, auch die zusätzlichen z-Referenzflächen 31, 33 zur Anlage an die zusätzlichen z-Gegenreferenzflächen 35, 37. Damit kann die äußere Belastung gemäß Pfeil 40 von einer größeren z-Referenz aufgenommen werden, sodaß eine Gefahr des Verlustes an x-y-Ausrichtgenauigkeit nicht mehr besteht.

Im übrigen kann die axiale Anordnung der zusätzlichen z-Referenzen im Verhältnis zu den ursprünglichen z-Referenzen so getroffen sein, daß der erwähnte Abstand zwischen der z-Referenzfläche 4 und der z-Gegenreferenzfläche 29 um ein oder wenige um größer ist als der Abstand zwischen einer der zusätzlichen z-Referenzflächen 31, 33 und der jeweils zugehörigen zusätzlichen z-Gegenreferenzflächen 35, 37. In diesem Fall kommen beim Zusammenspannen der beiden Kupplungsorgane 1, 20 zunächst die zusätzlichen z-Referenzflächen 31, 33 in Anlage an die zugehörigen zusätzlichen z-Gegenreferenzflächen 35, 37, wohingegen zwischen der z-Referenzfläche 4 und der z-Gegenreferenzfläche 29 die Abstandsdifferenz von einem oder wenigen µm bleibt. Erst wenn die axiale äußere Belastung 40 einen bestimmten Wert übersteigt, kommen auch die z-Referenzfläche 4 und die z-Gegenreferenzfläche 29 zur wechselseitigen Anlage. Diese Ausgestaltung der Erfindung hat den Vorteil, daß eine etwaige Stauchdeformation der Pfosten 32, 34 unter dem Einfluß hoher Belastung 40 ohne Einfluß auf die Ausrichtung des Kupplungsorgans 20 in der x-y-Ebene bleibt.

Die Erfindung ist auch in einer Spannvorrichtung anwendbar, die aus DE-U-295 21 030 bekannt ist. Dabei entfällt dann eine der Lippen 26, 28 und die Nut 24 ist auf der lippenfreien Seite durch eine feste Kante oder eine feste Nutenflanke begrenzt. Selbstverständlich besitzt dann der Prismenzapfen 5 auch nur an der der Lippe zugeordneten Seite eine einzige Prismenfläche, während der sich aus dem Nutengrund erhebende und mit der z-Gegenreferenzfläche versehene Vorsprung einseitig in die Nutenflanke übergeht.

Ferner liegt es im Rahmen der Erfindung, die Fläche 54 achsparallel und die zugehörige Nutflanke 66 prismatisch, d.h. geneigt zur Spannrichtung auszuführen, wobei dann der axialelastische Bodenabschnitt 71 mit axialem Schenkel 76 am Kupplungsorgan 50 so befestigt ist, dass der Schenkel 76 an der Fläche 54 axialelastisch anliegt.

## Patentansprüche

1. Kupplungsvorrichtung bestehend aus einem ersten Kupplungsorgan (1, 50) und einem zweiten Kupplungsorgan (20, 60) sowie einer Spanneinrichtung zum axialen Zusammenspannen der beiden Kupplungsorgane, wobei von dem ersten Kupplungsorgan wenigstens drei Zapfen (5, 52) vorstehen und an dem zweiten Kupplungsorgan wenigstens drei Nuten (24, 64) in einer der Anordnung der Zapfen entsprechenden Anordnung ausgebildet sind, und wobei an den Zapfen oder den Nuten x-y-Referenzflächen sowie an den Nuten oder den Zapfen axialelastische Elemente vorhanden sind, die beim Zusammenspannen das zweite Kupplungsorgan relativ zum ersten Kupplungsorgan in einer zur Spannrichtung senkrechten x-y-Ebene ausrichten, und wobei an beiden Kupplungsorganen beim Zusammenspannen zusammenwirkende z-Referenzflächen und z-Gegenreferenzflächen ausgebildet sind, **dadurch gekennzeichnet, daß** die z-Referenzflächen (4, 59) an den freien Strinflächen der Zapfen (5, 52) und die z-Gegenreferenzflächen (29, 69) am Nutengrund (23, 63) jeder Nut angeordnet sind
daß das erste Kupplungsorgan (1) mit mehreren in Umfangsrichtung beabstandeten Pfosten (32, 34) mit stirnseitigen zusätzlichen z-Referenzflächen (31, 33) und das zweite Kupplungsorgan (20) mit zusätzlichen z-Gegenreferenzflächen (35, 37) in den zusätzlichen z-Referenzflächen entsprechender Anordnung ausgerüstet sind
und daß im zusammengespannten Zustand der beiden Kupplungsorgane (1, 20) zwischen jeder z-Referenzfläche (4) und dejeweils zugehörigen z-Gegenreferenzfläche (29) oder zwischen jeder zusätzlichen z-Referenzfläche (31, 33) und der jeweils zugehörigen zusätzlichen z-Gegenreferenzfläche (35, 37) ein Abstand von einem oder wenigen µm besteht.

2. Vorrichtung nach Anspruch 1, **dadurch gekennzeichnet, daß** die z-Gegenreferenzfläche (29, 69) auf einem vertikalen Vorsprung (27, 65) des Nutengrundes ausgebildet ist.

3. Vorrichtung nach Anspruch 2, **dadurch gekennzeichnet, daß** die axialelastischen Elemente vertikale Schenkel (76, 78) eines separaten Nuteneinsatzes (70) sind, dessen Boden (72) auf einer Erhebung (62) des Nutengrundes (63) befestigt ist, und daß sich der mit der z-Gegenreferenzfläche (69) versehene Vorsprung (65) vertikal aus der Erhebung (62) durch eine Öffnung des Bodens (72) erstreckt.

4. Vorrichtung nach Anspruch 3 **dadurch gekennzeichnet, daß** die zusätzlichen z-Gegenreferenzflächen (35, 37) auf der mit den axialelastischen Elementen (26, 28) versehenen Oberseite (9) des zweiten Kupplungsorgans (20) ausgebildet sind.

5. Vorrichtung nach einem der vorstehenden Ansprüche, **dadurch gekennzeichnet, daß** die x-y-Referenzflächen prismatische, zur Spannrichtung geneigte Seitenflächen (6, 54) der Zapfen und die axialelastischen Elemente die Nuten teilweise überdeckende Lippen (26, 28) sind.

## Claims

1. Coupling apparatus consisting of a first coupling member (1, 50) and a second coupling member (20, 60) and a clamping means for axially clamping together the two coupling members, at least three pegs (5, 52) projecting from the first coupling member and at least three grooves (24, 64) being formed in the second coupling member in an arrangement corresponding to the arrangement of the pegs, and x-y reference surfaces being present on the pegs or the grooves, and axially elastic elements which align in a x-y plane perpendicular to the clamping direction on clamping together the second coupling member relative to the first coupling member being present on the grooves or the pegs, and z reference surfaces and z counter reference surfaces interacting on clamping together being formed on both coupling members, **characterized in that** the z reference surfaces (4, 59) are arranged on the free end faces of the pegs (5, 52) and the z counter reference surfaces (29, 69) are arranged on the groove base (23, 63) of each groove,
that the first coupling member (1) is equipped with a plurality of posts (32, 34) a distance apart in the circumferential direction and having additional z reference surfaces (31, 33) on their end faces and the second coupling member (20) is equipped with additional z counter reference surfaces (35, 37) in an arrangement corresponding to the additional z reference surfaces
and that, in the state when the two coupling members (1, 20) are clamped together, a distance of one or a few µm exists between each z reference surface (4) and the respective associated z counter reference surface (29) or between each additional z reference surface (31, 33) and the respective associated additional z counter reference surface (35, 37).

2. Apparatus according to Claim 1, **characterized in that** the z counter reference surface (29, 69) is formed on a vertical projection (27, 65) of the groove base.

3. Apparatus according to Claim 2, **characterized in that** the axially elastic elements are vertical limbs (76, 78) of a separate groove insert (70) whose bottom (72) is fastened on an elevation (62) of the groove base (63), and that the projection (69) provided with the z counter reference surface (69) extends vertically from the elevation (62) through an opening in the bottom (72).

4. Apparatus according to Claim 3, **characterized in that** the additional z counter reference surfaces (35, 37) are formed on the top (9) of the second coupling member (20), which top (9) is provided with the axially elastic elements (26, 28).

5. Apparatus according to any of the preceding Claims, **characterized in that** the x-y reference surfaces are prismatic lateral surfaces (6, 54) of the pegs, which lateral surfaces are inclined relative to the clamping direction, and the axially elastic elements are lips (26, 28) partly covering the grooves.

## Revendications

1. Dispositif d'accouplement constitué d'un premier élément d'accouplement (1, 50) et d'un deuxième élément d'accouplement (20, 60) ainsi que d'un dispositif de serrage pour le serrage axial conjoint des deux éléments d'accouplement, dans lequel au moins trois tenons (5, 52) dépassent du premier élément d'accouplement et au moins trois encoches (24, 64) sont pratiquées sur le deuxième élément d'accouplement selon une disposition correspondant à la disposition des tenons, et dans lequel il existe sur les tenons ou sur les encoches des surfaces de référence x-y ainsi que sur les encoches ou sur les tenons des éléments élastiques axialement qui orientent lors du serrage conjoint le deuxième élément d'accouplement par rapport au premier élément d'accouplement dans un plan x-y perpendiculaire à la direction de serrage, et dans lequel des surfaces de référence z et des surfaces de référence complémentaire z coopérant lors du serrage conjoint sont prévues sur les deux éléments d'accouplement, **caractérisé en ce que** les surfaces de référence z (4, 59) sont placées au niveau des surfaces frontales libres des tenons (5, 52) et les surfaces de référence complémentaires z (29, 69) sont placées au niveau du fond d'encoche (23, 63) de chaque encoche,
**en ce que** le premier élément d'accouplement (1) est équipé de plusieurs montants (32, 34) distants dans la direction circonférentielle et présentant des surfaces de référence z (31, 33) frontales supplémentaires et le deuxième élément d'accouplement (20) est équipé de surfaces de référence complémentaire z (35, 37) supplémentaires selon une disposition correspondant aux surfaces de référence z supplémentaires
et **en ce que**, dans l'état conjointement serré des deux éléments d'accouplement (1, 20), il existe une distance d'un ou de quelques µm entre chaque surface de référence z (4) et la surface de référence complémentaire z (29) respectivement associée ou
entre chaque surface de référence z supplémentaire (31, 33) et la surface de référence complémentaire z supplémentaire (35, 37) respectivement associée.

2. Dispositif selon la revendication 1, **caractérisé en ce que** la surface de référence complémentaire z (29, 69) est conçue sur une partie en saillie verticale (27, 65) du fond d'encoche.

3. Dispositif selon la revendication 2, **caractérisé en ce que** les éléments élastiques axialement sont des montants verticaux (76, 78) d'une garniture d'encoche (70) séparée dont le fond (72) est fixé à une bosse (62) du fond d'encoche (63) et **en ce que** la partie en saillie (65) munie de la surface de référence complémentaire z (69) s'étend verticalement à partir de la bosse (62) à travers une ouverture du fond (72).

4. Dispositif selon la revendication 3, **caractérisé en ce que** les surfaces de référence complémentaire z supplémentaires (35, 37) sont conçues sur le dessus (9), muni des éléments élastiques axialement (26, 28), du deuxième élément d'accouplement (20).

5. Dispositif selon l'une des revendications précédentes, **caractérisé en ce que** les surfaces de référence x-y sont des surfaces latérales (6, 54), prismatiques et inclinées vers la direction de serrage, des tenons et les éléments élastiques axialement sont des lèvres (26, 28) recouvrant partiellement les encoches.
